## Europäisches Patentamt
## European Patent Office
## Office européen des brevets

(19)

(11) Publication number: **0 158 649**
**B1**

# EUROPEAN PATENT SPECIFICATION

(12)

(45) Date of publication of the patent specification: **15.07.87**

(51) Int. Cl.⁴: **B 65 G 7/12, B 62 D 11/08, B 62 D 51/04**

(21) Application number: **84903457.4**

(22) Date of filing: **12.09.84**

(86) International application number: **PCT/SE 84/00296**

(87) International publication number: **WO 85/01275 (28.03.85 Gazette 85/8)**

(54) **TRACKED LOAD CARRYING VEHICLE.**

(30) Priority: **14.09.83 SE 8304950**

(43) Date of publication of application: **23.10.85 Bulletin 85/43**

(45) Publication of the grant of the patent: **15.07.87 Bulletin 87/29**

(84) Designated Contracting States: **AT BE CH DE FR GB LI LU NL SE**

(56) References cited:
**DE - C - 958 719**
**GB - A - 407 960**
**SE - A - 82 029 554**
**US - A - 1 814 996**
**US - A - 2 572 109**
**US - A - 3 055 445**
**US - A - 3 444 945**

(73) Proprietor: **ELEKTRO MEKAN I ARJÄNG AB, Box 94, S-67200 Arjäng (SE)**

(72) Inventor: **BERGQUIST, Erik, Arne, Ekostigen 48, S-811 37 Sandviken (SE)**

(74) Representative: **Frankland, Nigel Howard et al, FORRESTER & BOEHMERT Widenmayerstrasse 4/I, D-8000 München 22 (DE)**

ACTORUM AG

# Description

## Technical Field

The present invention is related to a tracked load carrying vehicle comprising a chassis; an engine mounted on the chassis for propelling the vehicle; an output shaft driven by the engine; two tracks provided in parallel on either side of the chassis and each one running over a plurality of wheels, at least one of which being adapted to be driven by the output shaft of the engine for driving the track; and a control lever for steering the vehicle. The load carrying vehicle is primarily intended as an aid for heavy transports in woods and fields, all the year round, for example for trailing logs in the woods, for transportation of plants in connection with new plantation on clearings, and for transportation of carcases in connection with hunting.

## Background Art

Load carrying vehicles for the above mentioned objects are previously known. These vehicles are either of snowscooter-type having tracks and turnable runners or wheels in front, or tracked special vehicles having particular equipment, for example a hoist. These vehicles are difficult to handle in woodland where the free space available is limited, because of their poor steering capacity. Vehicles steered by means of runners or wheels inevitably have a relatively large turning circle.

It has been proposed previously to steer tracked vehicles, such as bulldozers, tanks and armoured cars by providing a mechanism which enabels each track to be disengaged and/or braked whilst the other track is continously driven. When one track is disengaged and/or braked in this way, it is possible to turn the vehicle in a controlled manner. Such a steering arrangement incorporates complicated mechanisms which are normally controlled by a person who rides in or on the vehicle. An example of this type of steering is disclosed in United States Patent Specification No. 2 614 642.

It has been proposed previously to steer a small load carrying vehicle by means of a control lever adapted to actuate a braking device for braking one or the other of two tracks or driving wheels. A device of this type is described in United States Patent Specification No. 3,444,945. The steering device disclosed in that specification, however, comprises a differential gear, so that when one track is braked, the other track is driven faster. With such a differential gear, if one track looses its grip, and skids, all the driving force passes to the skidding track, and no driving effect at all is obtained from the other track. Thus a loading carrying vehicle incorporating such an arrangement is not really suitable for use under hard conditions in woods and fields all the year round.

United States Patent Specification No. 3,055,445 discloses a tracked load carrying vehicle comprising a chassis, an engine mounted on the chassis for propelling the vehicle, an output shaft driven by the engine, two tracks provided on either side of the chassis, the tracks being parallel and each track running over a plurality of wheels, each track being adapted to be driven by the output shaft of the engine, a respective clutch between the engine and the output shaft and each track, the clutches being arranged so that either one of the tracks can be disengaged from the output shaft of the engine, a control lever for steering the vehicle, the control lever being adapted to actuate one or the other of the clutches when turned from a neutral position to one side or the other side, so that the clutch interrupts the driving of the pertaining track.

The present invention seeks to provide a track to a load carrying vehicle which is easy to steer, and which is very easy to handle in difficult terrain.

According to this invention there is a tracked load carrying vehicle comprising a chassis; an engine mounted on the chassis for propelling the vehicle; an output shaft driven by the engine; two tracks provided on either side of the chassis, the tracks being parallel and each track running over a plurality of wheels, each track being adapted to be driven by the output shaft of the engine; a respective clutch between the engine output shaft and each track, the clutches being arranged so that either one of the tracks can be disengaged from the output shaft of the engine; a control lever for steering the vehicle, the control lever being adapted to actuate one or the other of the clutches when turned from a neutral position to one side or the other side, so that the clutch interrupts the driving of the pertaining track wherein the control lever is adapted to be turned around a substantially vertical shaft and provided with a cross arm, each end of the cross arm being connected to a linkage adapted to transmit the turning motion to the respective clutch each linkage consisting of a link arm, one end of which is pivoted on the cross arm and the other end of which is provided with a projecting pin engaged within an aperture in one end of a pivoting angle arm, the other end of which is adapted to engage with a movable portion of the clutch the arrangement being such that when the control lever is turned from a neutral position to either side, the respective clutch on the side to which the lever is moved is disengaged without affecting the clutch on the opposite side.

Preferably the angle arms are pivotally mounted on brackets which are rigidly attached to the chassis.

Conveniently the cross arm of the control lever is pivoted on a substantially vertical shaft forming the vertical pivot for the control lever, the vertical shaft being rigidly secured to the chassis, the control lever being pivotally mounted on a horizontal shaft on the cross arm.

Advantageously the two clutches each consist of a claw clutch, one portion of each claw clutch being rigidly attached to the output shaft of the engine and the other portion being movable on an intermediate shaft provided to transmit the power from the output shaft of the engine to the track.

Preferably each clutch has a movable portion adapted to cooperate with a brake means rigidly attached to the chassis for braking the respective track.

Conveniently the movable portion of each clutch is provided with a conical end adapted to cooperate with a brake cone attached to the chassis of the vehicle for braking the respective track when the control lever is positioned in one or the other of its end positions.

Advantageously the chassis is provided with a rotatably mounted clamp provided for the transportation of timber logs or for attaching a trailer to the chassis.

In a preferred embodiment of the invention the load carrying vehicle is provided with a separate clutch for each track, and a turnable control lever by means of which the clutches can be individually actuated, and thus a selected one of the tracks is easily and rapidly disengaged from the engine. Consequently, the preferred load carrying vehicle can be turned on a very small turning circle in any direction, and it is possible to effect a rapid change between the different turning directions. The use of a cross arm attached to the control lever and a simple linkage for controlling the clutches, which are preferably constituted by claw or dog clutches, makes the construction simple and reliable. The provision of separate track brakes, in one embodiment of the invention, further improves the maneuvreability of the vehicle.

Since one of the tracks can be disengaged from the engine it is possible to start the vehicle, for example when pulling a heavy load such as logs of wood, by first running only one track, which is supplied with the full power from the engine, with the control lever pulled over fully to one side. Then the other track can be engaged, by moving the control lever to the central position, thus creating a powerful jerk. In such a way a comparatively heavy load can be started, even though the engine may be comparatively weak. Thus the weight, and the manufacturing cost, of the vehicle can be kept to a minimum.

A preferred embodiment of a load carrying vehicle in accordance with the invention is intended to be steered by means of a control lever held by a person walking in front of the vehicle, although the arrangement may be modified to permit the person holding the control lever to walk beside the vehicle.

When the control lever is such that it is held by a person walking in front of the vehicle, the described combination of the control lever and the clutches will give the advantage that an automatic steering correction will be obtained if the vehicle should skid or otherwise slide diagonally, for example if the vehicle moves over icey spots or mud. If the situation arises where the vehicle has unintentionally turned diagonally relative to the desired direction, the track that is tending to push the vehicle into its diagonal position will be disengaged, and the whole of the engine power will be supplied to the other track to return the vehicle to the desired orientation. As soon as the vehicle has recovered the desired orientation, the first track will be re-engaged, so that both tracks will again propel the vehicle with the same force. Due to this automatic steering correction, the use of the vehicle is facilitated on bad roads and other rough surfaces, particularly surfaces as may be encountered during the winter, during heavy rainfall, or after snow has fallen. It is to be appreciated that the risk of the vehicle going out of control due to a heavy load pushing from behind on a downhill slope is considerably reduced.

In order that the invention may be more readily understood, and so that further features thereof may be appreciated, the invention will now be described, by way of example, with reference to the accompanying drawings in which:

FIGURE 1 is a perspective illustrative view of a tracked load carrying or pulling vehicle in accordance with the invention,

FIGURE 2 is an enlarged diagrammatic view of the steering mechanism and clutches of the vehicle shown in Figure 1,

FIGURE 3 is a view corresponding to Figure 2 showing the steering mechanism in one position corresponding to turning the vehicle, and

FIGURE 4 is a view corresponding to Figure 3 showing a modified steering mechanism for a vehicle in accordance with the invention.

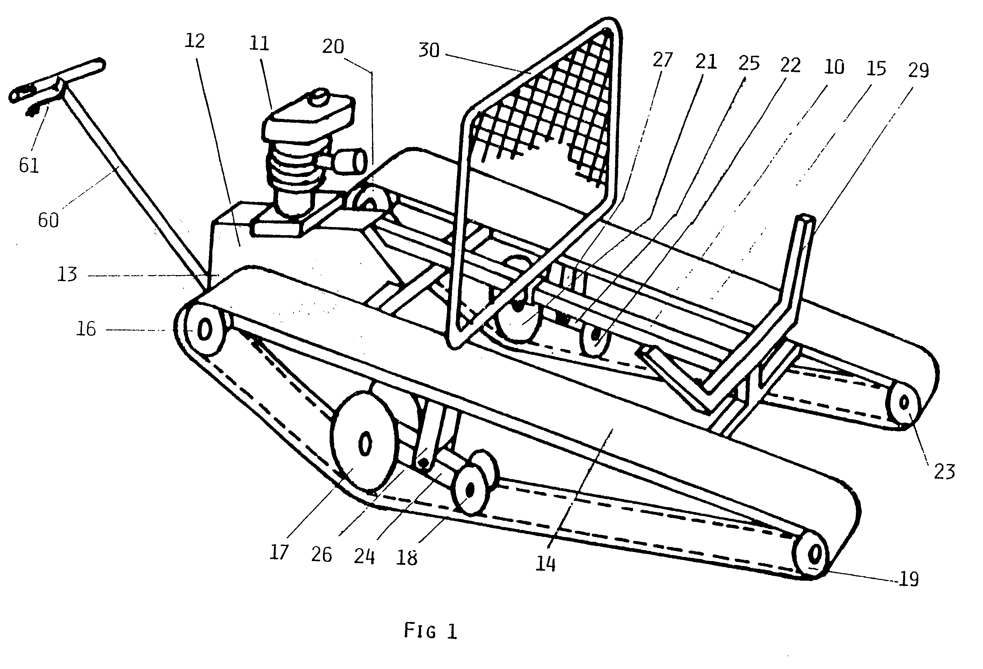

The tracked load carrying vehicle shown in Figure 1 comprises a chassis 10 and an engine 11, mounted on the chassis, for propelling the vehicle. The shaft of the engine is connected to a gear box 12 having an output shaft 13 for transmission of the propelling power from the engine.

The chassis is further provided with two tracks 14, 15 positioned in parallel with each other on either side of the chassis. Each track is running over a plurality of wheel pairs 16-19 and 20-23, respectively, and the shafts of these wheel pairs are mounted in bearings in the chassis 10. The wheel pairs 17, 18 and 21, 22 are mounted in bearings at opposite ends of a tiltable arm 24 and 25, respectively, the arm being mounted in bearings in a bracket 26 and 27 projecting from the chassis. The tiltable arms 24, 25 are spring loaded by means of springs (not shown) so that the tracks are always stretched. The wheels of the front wheel pair 16 and 20 for each track are adapted to be driven by the output shaft 13 from the gear box 12 for driving the tracks 14, 15. The wheels are provided with projecting teeth (not shown), and the tracks are provided with corresponding apertures or perforations (not shown) in a conventional way.

In the front the vehicle is provided with a control lever 60, the operation of which will be described in detail below.

The chasiss is also provided with a rotatably mounted clamp 29 for use in trailing timber logs or for attaching a trailer table, and with a protection net 30 for the engine 11.

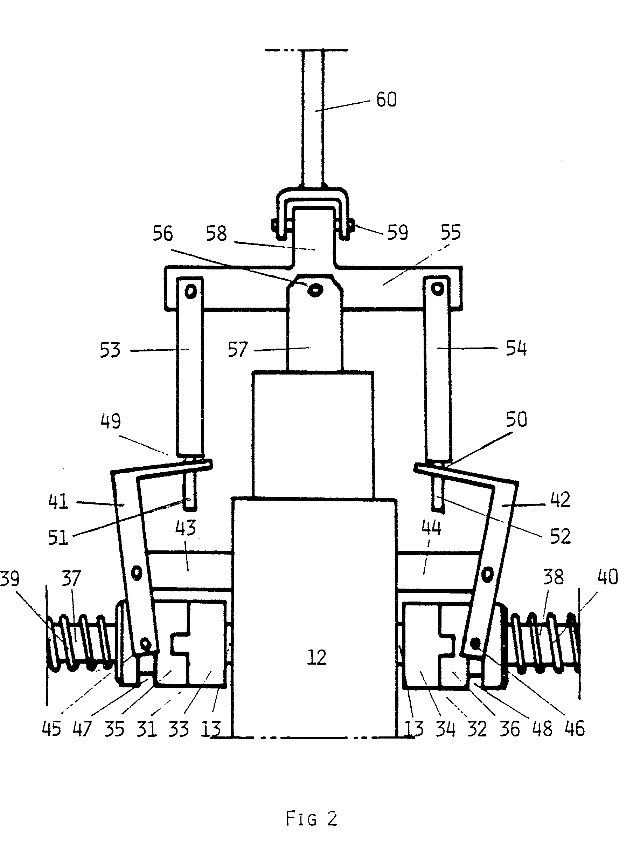

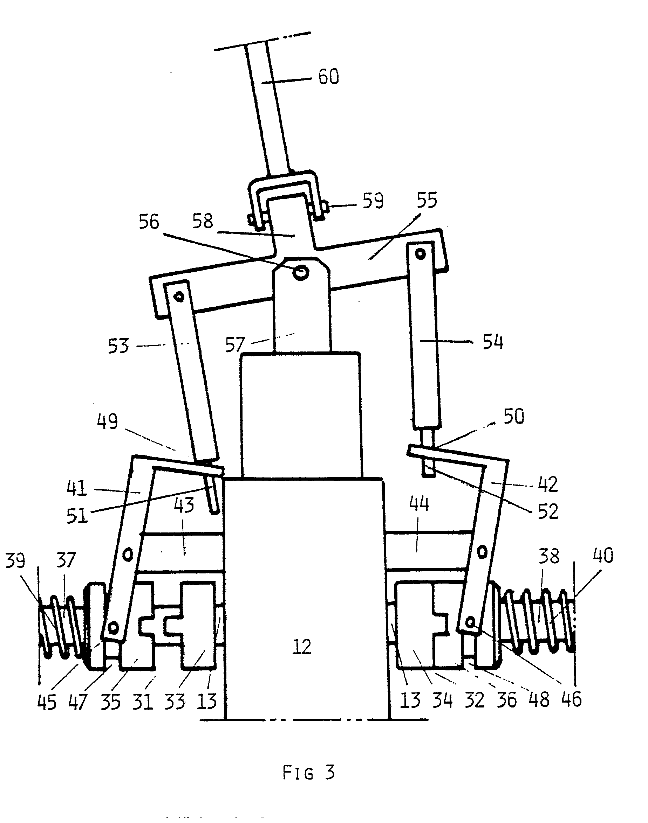

The transmission from the output shaft 13 of the gear box 12 to the wheel pairs 16, 20 is shown in Figure 2. The output shaft 13 is at each end provided with a claw clutch 31 and 32, respectively, one portion 33 and 34 of each clutch being rigidly connected to the output shaft 13 and the other portion 35 and 36 being movably connected to a rotatable intermediate shaft 37 and 38, respectively. The intermediate shaft is connected to the track driving pair of wheels 16 and 20, respectively. The movable portion 35 and 36 of each claw clutch is spring loaded by means of a spring 39 and 40, respectively, to mesh with the fixed portion on the output shaft 13 and can be brought out of mesh by means of an angular arm 41 and 42, respectively. The angular arm is pivoting on a bracket 43 and 44, respectively, projecting from the gearbox. One end of the angular arm is forked and provided with two pins 45 and 46, respectively, of which only one is shown in Figures 2 and 3, as the other pin is on the opposite side of the shaft 37 and 38. The pins engage with a groove 47 and 48, respectively, in the movable portion of the claw clutch. The other end of the angular arm is provided with an aperture 49 and 50 for engagement with a pin 51 and 52 on an arm 53 and 54, respectively, pivoting on a cross arm 55. The cross arm is pivoting on a shaft 56 on a bracket 57 rigidly attached to the gear box 12.

The arms 53, 54 are mounted in bearings at opposite ends of the cross arm 55. The cross arm is at its centre provided with a projecting portion 58 carrying a pivot 59. The pivot 59 is intended for positioning a control lever 60, so that the lever can be swivelled in a plane perpendicular to the plane of the cross arm 55.

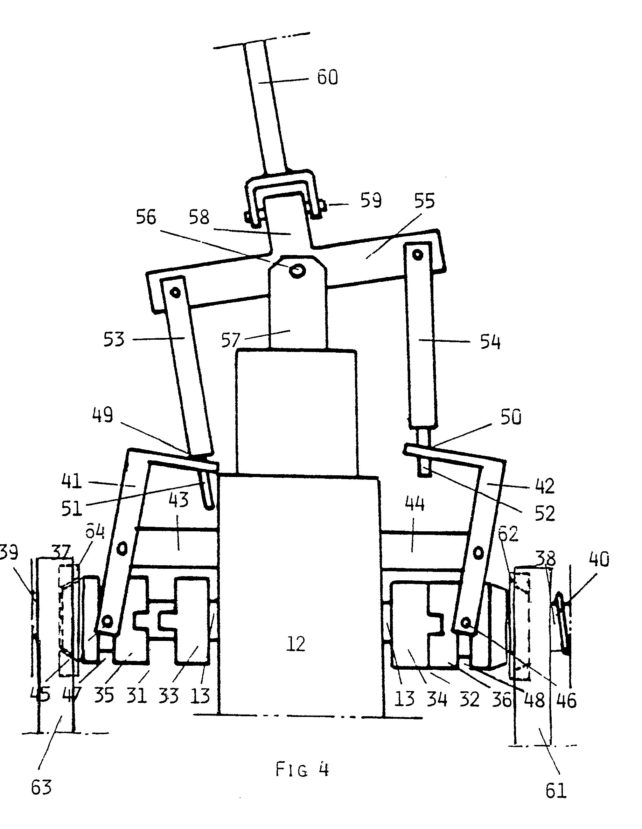

In the modified embodiment shown in Figure 4 the chassis 10 of the vehicle is provided with two brackets 61, 63 on either side of the gear box 12. Each one of these brackets carries a replaceable brake cone 62 and 64, respectively, mounted in such a way that it cannot rotate in the same direction as the intermediate shaft 37 and 38. The clutch portion 35 and 36 have a conical shape at their outer ends, i. e. the ends turned away from the gear box 12, and the ends are adapted to engage with the fixed brake cones 62 and 64, so that the cones can operate as steering brakes, as shown in the left portion of Figure 4.

The operation of the steering means will now be described with reference to Figures 2 and 3. When the control lever 60 is pointed straight forward, i. e. in parallel with the longitudinal central line of the vehicle, both claw clutches 31, 32 are in engagement, so that the power from the engine is transmitted to both tracks in parallel. The vehicle is then propelled straight ahead. When the vehicle has to be turned, the control lever is moved in the direction of the desired turn, for example to the left, as shown in Figure 3. This will cause the cross arm 55 to be turned, so that the arms 53 and 54 are moved. The arm 53 will then be pushed towards the angular arm 41, so that this arm is turned (clockwise in Figure 3), thus moving the movable portion 35 of the claw clutch 31 against the force of the spring 39, so that the clutch portions 33 and 35 are disengaged. The transmission from the output shaft 13 to the intermediate shaft 37 and the wheel pair 16 for the track 14 is thus interrupted, so that the track stops or only moves due to the movement of the vehicle. The other claw clutch 32 is not actuated by the changed direction of the control lever, as the pin 52 of the arm 54 only is lefted a small distance in the aperture 50 of the angular arm 42. Thus, the propelling of the other track 15 is continued and this track can then use the full power from the engine. The vehicle will then turn around its vertical central axis with a very small turning radius.

The vehicle can be turned to the right by moving the control lever to the right in a corresponding way.

In the case when the vehicle is provided with separate steering brakes 35, 64, 63 and 36, 62, 61, respectively, according to Figure 4, the transmission to the track will be interrupted and the track will also be braked, when the control lever 60 is turned to its end position, i. e. when the movable portion 35 or 36 of the claw clutch is in engagement with the brake cone 64 or 62, respectively. The brake cones are, by means of the brackets 63 and 61, rigidly attached to the chassis 10 of the vehicle.

The control lever 60 pivots around the shaft 56, which is substantially vertical in normal use of the vehicle, so that a change of turning direction can be made rapidly, as well as around the substantially horizontal pivot 59, so that the control lever can be kept at a comfortable level for the work. The control lever 60 is provided with a control for adjusting the rotation speed of the engine.

Due to the design of the steering means with two clutches for interrupting the transmission to one or the other of the tracks a comparatively weak engine can be used, for example a gasoline engine of about 5 Hp. The engine is preferably provided with a centrifugal clutch, so that the shaft of the engine is connected to the gearbox, when the rotation speed of the engine is increased over a certain limit by controlling the supply of gasoline by means of the control 61 attached to the control lever. This will avoid a separate clutch control.

While only two embodiments of the tracked load carrying vehicle according to the invention have been described and shown, it is evident that many modifications and variations are possible within the scope of the invention as defined in the attached claims. Instead of claw clutches, for example friction clutches can be used, and instead of the shown wheel pairs, for example driving rolls can be used. As an alternative, the wheels can be provided in a bogie, and the bogie can then be attached to the chassis or form the chassis. The control lever can also be arranged so that the vehicle can be steered from beside the vehicle, which may be an advantage, for example when heavy loads have to be transported down steep hills. The steering brakes can alternatively be designed for direct, firm locking, for example by means of teeth or jaws.

## Claims

1. A tracked load carrying vehicle comprising a chassis (10); an engine (11) mounted on the chassis for propelling the vehicle; an output shaft (13) driven by the engine; two tracks (14, 15) provided on either side of the chassis, the tracks being parallel and each track running over a plurality of wheels (16-19, 20-23), each track being adapted to be driven by the output shaft (13) of the engine; a respective clutch (31, 32) between the engine output shaft (13) and each track (14, 15), the clutches being arranged so that either one of the tracks can be disengaged from the output shaft of the engine; a control lever (60) for steering the vehicle, the control lever (60) being adapted to actuate one or the other of the clutches (32, 34) when turned from a neutral position to one side or the other side, so that the clutch interrupts the driving of the pertaining track (14, 15) characterised in that the control lever (60) is adapted to be turned around a substantially vertical shaft (56) and provided with a cross arm (55), each end of the cross arm (55) being connected to a linkage (41, 53; 42, 54) adapted to transmit the turning motion to the respective clutch (31, 32) each linkage (41, 53; 42, 54) consisting of a link arm (53, 54), one end of which is pivoted on the cross arm (55) and the other end of which is provided with a projecting pin (51, 52) engaged within an aperture (49, 50) in one end of a pivoting angle arm (41, 42), the other end of which (45, 46) is adapted to engage with a movable portion (35, 36) of the clutch (31, 32) the arrangement being such that when the control lever (60) is turned from a neutral position to either side, the respective clutch on the side to which the lever is moved is disengaged without affecting the clutch on the opposite side.

2. A vehicle according to claim 1 characterised in that the angle arms (41, 42) are pivotally mounted on brackets (43, 44) which are rigidly attached to the chassis (10).

3. A vehicle according to claim 1 or claim 2 characterised in that the cross arm (55) of the control lever (60) is pivoted on a substantially vertical shaft (56) forming the vertical pivot for the control lever, the vertical shaft (56) being rigidly secured to the chassis (10), the control lever being pivotally mounted on a horizontal shaft (59) on the cross arm (55).

4. A vehicle according to any one of the preceding claims characterised in that the two clutches (31, 32) each consist of a claw clutch, one portion (33, 34) of each claw clutch being rigidly attached to the output shaft (13) of the engine and the other portion (35, 36) being movable on an intermediate shaft (37, 38) provided to transmit the power from the output shaft of the engine to the track (14, 15).

5. A vehicle according to any one of the preceding claims characterised in that each clutch (31, 32) has a movable portion (35, 36) adapted to cooperate with a brake means (64, 62), rigidly attached to the chassis (10) for braking the respective track (14, 15).

6. A vehicle according to claim 5 characterised in that the movable portion (35, 36) of each clutch is provided with a conical end adapted to cooperate with a brake cone (64, 62) attached the chassis (10) of the vehicle for braking the respective track (14, 15) when the control level (60) is positioned in one or the other of its end positions.

7. A vehicle according to any one of the preceding claims, characterised in that the chassis (10) is provided with a rotatably mounted clamp (29) provided for the transportation of timber logs or for attaching a trailer to the chassis.

**Patentansprüche**

1. Raupenlastfahrzeug mit einem Chassis (10); einem Motor (11), angebracht an dem Chassis, um das Fahrzeug vorwärts zu bewegen; eine Ausgangswelle (13), angetrieben durch den Motor; zwei Raupenelementen (14, 15), vorgesehen an jeder Seite des Chassis, wobei die Raupenelemente parallel sind und jedes Raupenelement über eine Mehrzahl von Rädern (16-19, 20-23) läuft und weiterhin jedes Raupenelement geeignet ist, durch die Ausgangswelle (13) des Motors angetrieben zu werden; eine jeweilige Kupplung (31, 32) zwischen der Motorausgangswelle (13) und jedem Raupenelement (14, 14), wobei die Kupplungen so angeordnet sind, dass jedes der Raupenelemente von der Ausgangswelle des Motors gelöst werden kann; einen Steuerhebel (60), um das Fahrzeug zu steuern, wobei der Steuerhebel (60) geeignet ist, die eine oder die andere der Kupplungen (32, 34) zu betätigen, wenn er von einer neutralen Stellung zu einer Seite oder der anderen Seite gewendet wird, so dass die Kupplung den Antrieb des betreffenden Raupenelementes (14, 15) unterbricht, dadurch gekennzeichnet, dass der Steuerhebel geeignet ist, um eine im wesentlichen vertikale Welle (56) gedreht bzw. gewendet zu werden und mit einem Querarm (55) versehen ist, wobei jedes Ende des Querarmes (55) mit einer Verbindung (41, 53; 42, 54) verbunden ist, geeignet, die Drehbewegung auf die jeweilige Kupplung (31, 32) zu übertragen und jede Kupplung (41, 53; 42, 54) aus einem Verbindungsarm (53, 54) besteht, von dem ein Ende an dem Querarm (55) gelenkig angebracht ist und das andere Ende dessen mit einem Vorsprungszapfen (51, 52) versehen ist, erfasst in einer Öffnung (49, 50) in einem Ende eines gelenkigen Winkelarmes (41, 42), und wobei das andere Ende (45, 46) geeignet ist, mit einem bewegbaren Bereich (35, 36) der Kupplung (31, 42) zusammenzuwirken, wobei weiter die Anordnung so getroffen ist, dass dann, wenn der Steuerhebel (60) von einer neutralen Stellung zu einer der Seiten gedreht wird, die jeweilige Kupplung an der Seite, zu welcher der Hebel bewegt worden ist, gelöst ist, ohne dass die Kupplung an der entgegengesetzten Seite betroffen ist.

2. Fahrzeug nach Anspruch 1, dadurch gekennzeichnet, dass die Winkelarme (41, 42) drehbar an Abstützungen (43, 44) angebracht sind, welche starr an dem Chassis (10) angebracht sind.

3. Fahrzeug nach Anspruch 1 oder 2, dadurch gekennzeichnet, dass der Querarm (55) des Steuerhebels (60) drehbar ist an einer im wesentlichen vertikalen Welle (56), welche die vertikale Drehachse für den Steuerhebel bildet, wobei die vertikale Welle (56) starr mit dem Chassis (10) verbunden ist und der Steuerhebel drehbar an einer horizontalen Welle (59) an dem Querarm (55) angebracht ist.

4. Fahrzeug nach einem der vorstehenden Ansprüche, dadurch gekennzeichnet, dass die zwei Kupplungen (31, 32) jeweils aus einer Klauenkupplung bestehen, wobei ein Bereich (33, 34) jeder Klauenkupplung starr an der Ausgangswelle (13) des Motors angebracht ist und der andere Bereich (35, 36) bewegbar an einer mittleren Welle (37, 38) ist, vorgesehen, um die Leistung von der Ausgangswelle des Motors auf die Raupenelemente (14, 15) zu übertragen.

5. Fahrzeug nach einem der vorstehenden Ansprüche, dadurch gekennzeichnet, dass jede Kupplung (31, 32) einen bewegbaren Bereich (35, 36) besitzt, geeignet, mit Bremselementen (64, 62) zusammenzuwirken, die starr an dem Chassis (10) angebracht sind, um das jeweilige Raupenelement (14, 15) zu bremsen.

6. Fahrzeug nach Anspruch 5, dadurch gekennzeichnet, dass der bewegbare Bereich (35, 36) jeder Kupplung mit einem konischen Ende versehen ist, geeignet, mit einem Bremskonus (64, 62) zusammenzuwirken, angebracht an dem Chassis (10) des Fahrzeugs, um das jeweilige Raupenelement (14, 15) zu bremsen, wenn der Steuerhebel (60) in der einen oder der anderen seiner Endstellungen positioniert ist.

7. Fahrzeug nach einem der vorstehenden Ansprüche, dadurch gekennzeichnet, dass das Chassis (10) mit einer drehbar angebrachten Klammer (29) versehen ist, vorgesehen für einen Transport von Bauholzbalken, oder um einen Anhänger an das Chassis anzuhängen.


## Revendications

1. Véhicule fardier chenillé comprenant un châssis (10); un moteur (11) monté sur le châssis pour propulser le véhicule; un arbre de sortie (13) mené par le moteur; deux chenilles (14, 15) prévues de part et d'autre du châssis, ces chenilles étant parallèles et chaque chenille défilant autour d'un grand nombre de roues (16-19, 20-23), chaque chenille étant destinée à être entraînée par l'arbre de sortie (13) du moteur; un embrayage respectif (31, 32) situé entre l'arbre de sortie (13) du moteur et chaque chenille (14, 15), les embrayages étant réalisés de telle sorte que la prise puisse être supprimée entre l'une ou l'autre des chenilles et l'arbre de sortie du moteur; un levier de commande (60) pour braquer le véhicule, ce levier de commande (60) étant destiné à actionner l'un ou l'autre des embrayages (32, 34), lorsqu'il est tourné d'un côté ou de l'autre à partir d'une position neutre, de manière que l'embrayage interrompe l'entraînement de la chenille considérée (14, 15), caractérisé par le fait que le levier de commande (60) est conçu pour être tourné autour d'un axe sensiblement vertical (56) et est pourvu d'un bras transversal (55), chaque extrémité de ce bras transversal (55) étant reliée à une tringlerie (41, 53; 42, 54) destinée à transmettre le mouvement rotatoire à l'embrayage respectif (31, 32), chaque tringlerie (41, 53; 42, 54) présentant une biellette (53, 54) dont l'une des extrémités pivote sur le bras transversal (55) et dont l'autre extrémité est munie d'un tourillon saillant (51, 52) s'engageant dans un orifice (49, 50) pratiqué dans l'une des extrémités d'un bras coudé pivotant (41, 42) dont l'autre extrémité (45, 46) est conçue pour venir en prise avec une partie mobile (35, 36) de l'embrayage (31, 32), l'agencement étant tel que, lorsqu'une rotation est imprimée au levier de commande (60) d'un côté ou de l'autre à partir d'une position neutre, l'embrayage respectif situé du côté vers lequel le levier est mis en mouvement soit débrayé sans affecter l'embrayage situé du côté opposé.

2. Véhicule selon la revendication 1, caractérisé par le fait que les bras coudés (41, 42) sont montés à pivotement sur des consoles (43, 44) reliés rigidement au châssis (10).

3. Véhicule selon la revendication 1 ou la revendication 2, caractérisé par le fait qu'un pivotement est imprimé au bras transversal (55) du levier de commande (60) sur un axe sensiblement vertical (56) formant le pivot vertical dudit levier de commande, l'axe vertical (56) étant assujetti au châssis (10), le levier de commande étant monté avec faculté de pivotement autour d'un axe horizontal (59) sur le bras transversal (55).

4. Véhicule selon l'une quelconque des revendications précédentes, caractérisé par le fait que les deux embrayages (31, 32) consistent chacun en un embrayage à crabot, l'une (33, 34) des parties de chaque embrayage à crabot étant reliée rigidement à l'arbre de sortie (13) du moteur, et l'autre partie (35, 36) étant mobile sur un arbre intermédiaire (37, 38) prévu pour transmettre la puissance de l'arbre de sortie du moteur à la chenille (14, 15).

5. Véhicule selon l'une quelconque des revendications précédentes, caractérisé par le fait que chaque embrayage (31, 32) comporte une partie mobile (35, 36) destinée à coopérer avec un moyen de freinage (64, 62) assujetti au châssis (10) pour freiner la chenille respective (14, 15).

6. Véhicule selon la revendication 5, caractérisé par le fait que la partie mobile (35, 36) de chaque embrayage est dotée d'une extrémité conique conçue pour coopérer avec un cône de freinage (64, 62) fixé au châssis (10) du véhicule, afin de freiner la chenille respective (14, 15) lorsque le levier de commande (60) est placé dans l'une ou l'autre de ses positions extrêmes.

7. Véhicule selon l'une quelconque des revendications précédentes, caractérisé par le fait que le châssis (10) est équipé d'un crampon (29) monté rotatif, prévu pour le transport de bois d'équarrissage ou pour l'attelage d'une remorque au châssis.

12  11  20  30  27 21 25 22 10 15 29

61

60

13

16

17 26 24 18  14

23

19

0 158 649

7

Fig 1

FIG 2

FIG 3

FIG 4